Europäisches Patentamt

European Patent Office

Office européen des brevets

(11) Veröffentlichungsnummer : **0 100 823**
**B1**

# (12) EUROPÄISCHE PATENTSCHRIFT

(45) Veröffentlichungstag der Patentschrift :
01.10.86

(21) Anmeldenummer : 83104895.4

(22) Anmeldetag : 18.05.83

(51) Int. Cl.⁴ : **G 11 B 23/023**

(54) **Bandkassettenbehälter.**

(30) Priorität : 24.05.82 DE 3219422

(43) Veröffentlichungstag der Anmeldung :
22.02.84 Patentblatt 84/08

(45) Bekanntmachung des Hinweises auf die Patenterteilung : 01.10.86 Patentblatt 86/40

(84) Benannte Vertragsstaaten :
DE FR GB IT SE

(56) Entgegenhaltungen :
AT-B- 365 819
DE-A- 2 917 806
DE-A- 3 015 748
DE-A- 3 112 103
DE-A- 3 114 333

(73) Patentinhaber : Florjancic, Peter
Isarstrasse 251
D-8109 Wallgau (DE)

Zwez, Hans-Jörg
Am Raineck 23
D-8102 Mittenwald (DE)

(72) Erfinder : Florjancic, Peter
Isarstrasse 251
D-8109 Wallgau (DE)
Erfinder : Zwez, Hans-Jörg
Am Raineck 23
D-8102 Mittenwald (DE)

(74) Vertreter : Huss, Carl-Hans, Dipl.-Ing. et al
Patentanwalt Griesstrasse 3 a Postfach 14 54
D-8100 Garmisch-Partenkirchen (DE)

**Beschreibung**

Die Erfindung richtet sich auf eine aus einem Gehäuse und einer in diesem ausziehbar aufgenommenen Schublade bestehenden Aufnahme aus Kunststoff für die Lagerung und Entnahme insbesondere genormter Tonbandkassetten.

Die Anforderungen, die grundsätzlich an eine derartige Kassettenaufnahme gestellt werden, sind in der DE-OS 2 917 806 genannt. Bei dieser bekannten Kassettenaufnahme ist das Gehäuse tunnelartig ausgeführt, und die Seitenwände der Schublade weisen an ihrer Unterseite eine dreieckförmige Ausnehmung auf, die sie in der herausgezogenen und abgekippten Stellung hält und gegen unbeabsichtigtes Einscheiben arretiert.

Die tunnelartige Ausführung des Gehäuses macht es teilweise unmöglich, teilweise sehr schwierig, in ihm für die sichere, aber möglichst reibungsarme und spielarme Führung der Schublade und deren Fixierung in herausgezogener und eingeschobener Stellung zweckmäßige Führungs- und Arretierungsmittel in Form von Vertiefungen oder Vorsprüngen anzubringen. Wenn man in Betracht zieht, daß derartige Kassettenaufnahmen möglichst dünne Wände aufweisen sollen, ist klar, daß auch das Bedrucken tunnelartig gestalteter Gehäuse schwierig ist, weil die Abstützung der bedruckten Fläche gegen Durchbiegung beim Drucken schwierig ist, ganz abgesehen davon, daß ein Bedrucken der Innenflächen des Gehäuses unmöglich ist. Außerdem setzt die tunnelartige Ausführung des Gehäuses voraus, daß die Gehäuserückwand ganz durch die Schublade gebildet wurde, wodurch die für ihr Einfädeln in das Gehäuse erforderliche Biegefähigkeit der Seitenwände der Lade herabgesetzt wurde. Die dreieckförmigen Ausnehmungen in den Seitenwänden der Schublade schwächen diese stark und geben somit Anlaß zu Rissen. Diese Ausnehmungen in den Seitenwänden der Schublade waren aber bei der vorerwähnten Kassette nicht nur notwendig, um sie in gekippter Stellung zu fixieren, sondern auch um überhaupt eine genügend große Kippschräge zu gewährleisten.

Demnach war es Aufgabe der Erfindung, eine gegenüber dem Stand der Technik verbesserte Kassettenaufnahme zu schaffen, die hierfür im Gehäuse die Führung der Schublade und ihre Fixierung bewirkende Ausnehmungen und Vorsprünge anzubringen gestattet und bei der die Seitenwände der Schublade nicht geschwächt werden. Diese Aufgabe löst die Erfindung mit den in den Ansprüchen angegebenen Mitteln. Sie ist an einem Ausführungsbeispiel in den Zeichnungen zur Anschauung gebracht und anhand dieser beschrieben. Es stellen dar :

Figur 1 eine Teilaufsicht auf das Gehäuse einer Kassettenaufnahme nach der Erfindung in etwa natürlichem Maßstab ;

Figur 2 einen Vertikalschnitt durch das Gehäuse nach Fig. 1 ;

Figur 3 einen der Fig. 2 entsprechenden Schnitt, jedoch mit einer Schublade in nicht ganz herausgezogener und gekippter Stellung ;

Figur 4 einen Schnitt durch das Gehäuse rechtwinklig zu dem nach den Fig. 2 und 3 ;

Figur 5 eine Teil-Unteransicht eines Gehäusebodens ;

Figur 6 eine Aufsicht auf eine Schublade ;

Figur 7 einen Vertikalschnitt durch die Schublade nach Fig. 6 ;

Figur 8 eine Seitenansicht der Schublade nach den Fig. 6 und 7 ;

Figur 9 die Teildarstellung einer abgewandelten Ausführungsform eines Gehäusebodens nach Fig. 5 in der Aufsicht und in vergrößertem Maßstab ;

Figur 10 den Ausschnitt X der Fig. 6 im Maßstab der Fig. 5.

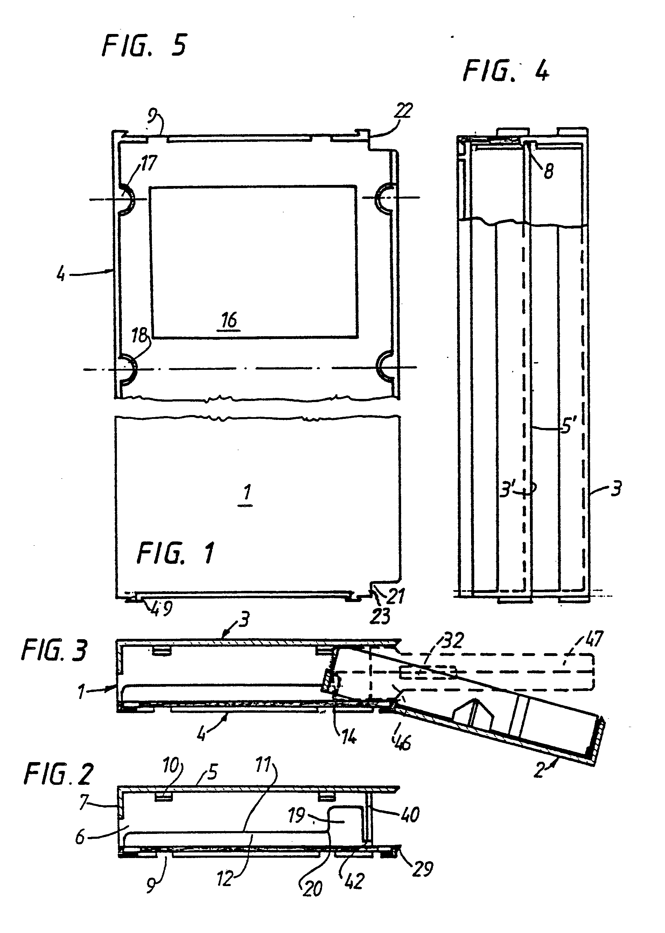

Die Hauptteile der Kassettenaufnahme nach der Erfindung sind ein allgemein mit 1 bezeichnetes Gehäuse (Fig. 3) und eine Schublade 2 in diesem. Das Gehäuse wiederum ist aus zwei Hauptteilen, nämlich dem Oberteil 3 und dem Boden 4 zusammengesetzt.

Das Gehäuseoberteil 3 besteht aus der Decke 5, den beiden Seitenwänden 6 und der Rückwand 7. Jede Seitenwand 6 ist für den Zusammenbau von Gehäuseoberteil 3 und Boden 4 mit mindestens zwei nach innen gerichteten Haken 8 versehen, die in Ausnehmungen 9 (Fig. 2 und 5) des Bodens 4 einrasten. Hierzu müssen sich die Seitenwände elastisch biegen lassen können. Entsprechend den Ausnehmungen 9 weisen die Seitenwände 6 des Gehäuseoberteils 3 gleich große Öffnungen 10 auf, in die die Haken 8 dann einrasten, wenn für die Bildung eines Kassettenaufnahmestapels (Fig. 4) ein Gehäuseoberteil auf ein anderes gesetzt und dann nur ein Boden 4 für die unterste Aufnahme benötigt wird. Dadurch wird nicht nur erheblich an Material, sondern auch an Bauhöhe eingespart, oder bei vergleichsweise gleicher Bauhöhe können mehr Kassetten untergebracht werden.

Das Zusammensetzen des Gehäuses 1 aus einem Gehäuseoberteil 3 und einem Gehäuseboden 4 (oder aus einem Gehäuseoberteil und der Decke 5' des darunterliegenden Oberteils 3') ist deshalb sehr vorteilhaft, weil es die spritztechnische Herstellung des Gehäuses insgesamt sehr vereinfacht. Es können, ohne zu besonders komplizierten Spritzformen greifen zu müssen, z. B. zu Spritzformen mit Schiebern und Kernen, innen am Gehäuse Vorsprünge, Vertiefungen, Ausnehmungen und dgl. angebracht werden, und beide Teile können innen und außen leicht bedruckt werden, wobei die jeweilige Druckfläche auf eine stabile Unterlage gelegt werden kann. Auch die Montage der ganzen Aufnahme ist einfacher, weil hierzu die Kassette auf den Gehäuseboden gelegt und danach das Gehäuseoberteil auf den Boden mit Kassette einfach aufgedrückt werden kann.

So werden z. B. durch Absätze 11 an der Innenseite der Seitenwände 6 des Gehäuseoberteils 3 und durch die innere Oberfläche des eingesetzten Bodens Führungsbahnen 12 gebildet, in denen außen an den Seitenwänden 13 der Schublade angebrachte Nocken 14 und schmale Führungsleisten 15 gleiten.

Dadurch werden bei fast spielfreier Führung die aufeinander reibenden Flächen verringert, was den Verschleiß verringert und ein Quietschen vermeidet. Die Führungsleiten 15 sind so bemessen und so angeordnet, daß die ganz herausgezogene Lade kippen kann.

Außerdem weist der Gehäuseboden 4 Material sparende Durchbrüche oder Fenster 16 auf und außen an den langen Seiten über spritztechnisch bedingten Öffnungen 18, nach innen gerichtete Zungen 17, die als Papierhalter dienen, d. h. man kann zwischen der Unterfläche des Bodens und der der Zungen ein Papier, z. B. ein bedrucktes Papier, anbringen. Dies kann z. B. ein die Fenster 16 abdeckendes Kartonblatt mit dem von außen sichtbaren Firmennamen sein, das nach dem Kauf umgedreht werden kann und auf der dann äußeren Seite eine Tabelle für aufgenommene Musikstücke enthält.

Jede Führungsbahn 12 geht nahe der Gehäuseöffnung in eine Erweiterung 19 über, um bei dem in Fig. 3 dargestellten Kippen der Lade Platz für den Nocken 14 zu schaffen.

Wenn der Nocken 14 an seiner dem Gehäuseinneren zugewandten Seite abgerundet ist, dann wird die Lade beim Kippen durch Abwälzen an der durch den Übergang von Bahn 12 und Erweiterung 19 gebildeten Ecke 20 noch ein Stück auswärts geschoben.

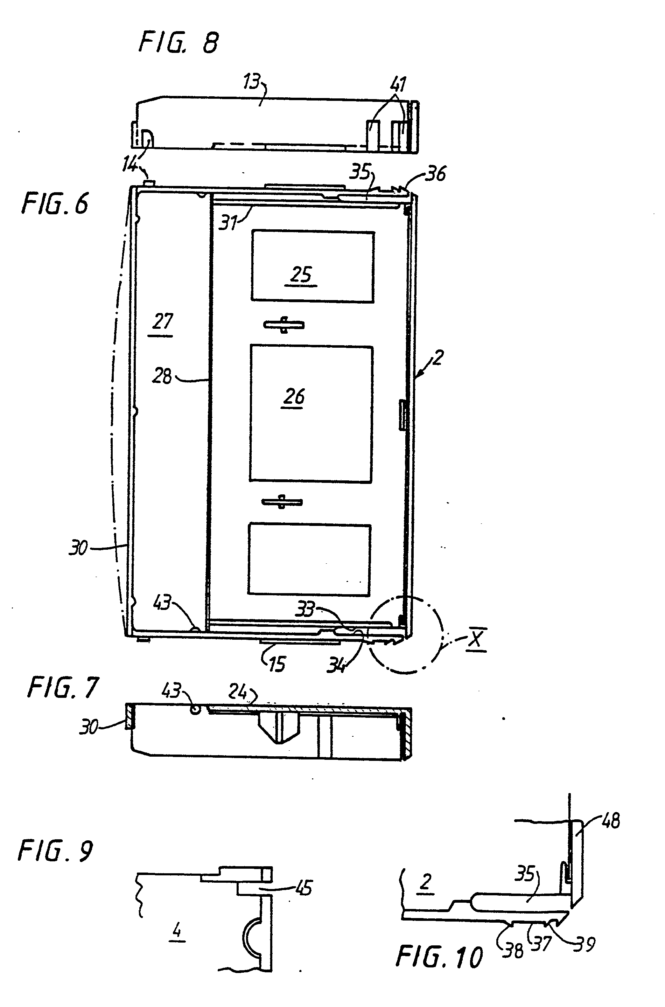

Wie insbesondere aus Fig. 2 ersichtlich, erstrecken sich die Seitenwände 6 des Gehäuseoberteils nicht über die ganze Gehäusetiefe, und nach Fig. 1 und 5 erstrecken sich sowohl das Gehäuseoberteil 3 als auch der Gehäuseboden 4 auf der Seite der Gehäuseöffnung von der Mitte aus nicht über die ganze Breite, sondern lassen beidseits zwei Ausnehmungen 21 frei, in die der hintere Teil der Lade beim Kippen gemäß Fig. 3 infolge eines nachfolgend beschriebenen Merkmals an ihr eintaucht. Die kürzeren Kanten 22 der Ausnehmungen des Bodens (oder bei einem Aufnahmestapel auch die Kanten 23 der Decke 5 des jeweils darunterliegenden Gehäuseteils 3) sind die Kanten, um die die Schublade 2 beim Herausziehen wie eine Waage gekippt wird. Die längeren, zu den Kanten 22, 23 senkrecht verlaufenden Kanten der Ausnehmungen 21 verhindern dann auch ein seitliches Verkanten der Lade, weil sich ihre Seitenwände 13 an ihnen führen. Hierzu weist der Schubladenboden 24 neben den Materialeinsparungsausnehmungen 25 und 26 eine sich über die innere Breite erstreckende Ausnehmung 27 auf (Fig. 6), wodurch eine Innenkante 28 entsteht, die gegen die, gegebenenfalls abgeschrägte, Vorderkante 29 des Bodens 4 bzw. der Decke 5 des Gehäuses bei Kassettenstapeln stoßen würde.

Die Ausnehmung 27 bewirkt auch, daß die Rückwand 30 der Lade 2 nach innen auf die Ausnehmung zu gebogen werden kann, wodurch der Abstand zwischen den Nocken 14 geringer wird und diese sich in die Führungsbahn 12 des Gehäuses 1 leichter einfädeln lassen. Diese Rückwand 30 kann auch gemäß der strich-punktierten Linie in Fig. 6 leicht gebogen hergestellt sein. Bei eingeschobener, durch die später beschriebene Arretierung fixierter Lade wird dann die Rückwand wie eine Feder gespannt und beim Lösen der Arretierung die Schublade ganz oder zumindest zum leichteren Ergreifen teilweise aus dem Gehäuse geschoben.

31 sind sich über den Boden der Lade erstreckende Leisten geringer Höhe, die die Kassette seitlich halten. Bekanntlich weisen sogenannte Normkassetten abnahmeseitig seitliche Stege 32 auf (Fig. 3), und der Kassettenbreite zwischen diesen Stegen entspricht dann die lichte Weite der Lade, während die lichte Weite zwischen den Leisten 31 der übrigen Kassettenbreite (ohne deren Stege) entspricht.

An beiden Seiten der Schublade 2 verbleibt zwischen den Außenkanten 33 des Bodens und der Innenfläche 34 der Seitenwände 13 ein Schlitz 35, durch den das Ende dieser Seitenwände eine federnde Verriegelungszunge 36 wird. Die lösbare Verbindung zwischen Gehäuse und Lade besteht aus einer zwischen sich eine Rastnute 37 bildenden Auflaufschräge 38 und Vorsprüngen 39 an der Außenseite der Verankerungszunge sowie einer Raste 40 (Fig. 2) an der Innenseite der Seitenwand 6 des Gehäuses.

Beim Einschieben der Lade rastet also die Raste 40 von selbst in die Rastnuten 37 ein, während zum Herausziehen der Lade bei dem dargestellten Beispiel die Verankerungszungen 36 nur zwischen Daumen und Zeigefinger einer Hand bis zu den durch die Innenkanten der Schlitze 35 gebildeten Anschlägen zusammengedrückt zu werden brauchen, um die Rasten 40 aus den Rastnuten 37 lösen und die Lade ziehen zu können.

Hierfür sind am Ende der Verriegelungszungen 36 Handhaben 41 vorgesehen, die gemäß Fig. 8 nicht die ganze Höhe der Seitenwände der Lade einnehmen, wodurch man bei einer Stapelung mehrerer Kassettenaufnahmen übereinander mit Daumen und Zeigefinger nicht mehr als eine Lade ergreifen kann. Als Handhaben 41 dienen hier die die Rastnuten 37 bildenden Vorsprünge 38 und 39.

Bei dem dargestellten Beispiel sind an beiden Seiten der Lade Verriegelungszungen vorgesehen, jedoch genügt wegen der vorbeschriebenen Mittel zur Vermeidung von Verkantungen auch eine Verriegelung an einer Seite.

Für die Leisten 15 an der Lade ist im Anschluß an die Erweiterung 19 der Führungsbahnen 12 eine entsprechend bemessene Bahnfortführung 42 vorgesehen.

43 sind linsen- oder kalottenförmige Rastnocken an den Innenflächen 34 der Seitenwände 13 der Schublade, die sich bei ganz gezogener Lade unter die Unterfläche von Boden oder Decke des Gehäuses legen und sie auch dann in der Kippstellung halten, wenn das Gehäuse senkrecht aufrecht steht. Wegen der Elastizität der Seitenwände « schnappen » die Rastnocken 43 gegen leichten Widerstand nach innen, wenn sie über die Kanten 22 oder 23 gleiten. Wenn unter einer Aufnahme oder einem Aufnahmestapel kein Freiraum vorhanden ist, kann die Lade auch nach oben gekippt werden und hält dann in dieser Stellung durch die Rastnocken 43.

Die gezogene und gekippte Schublade 2 ist also gegen unbeabsichtigtes Einschieben, wie es z. B. im Kraftfahrzeug bei einer Kassettenentnahme sonst leicht passieren kann, dreimal gesichert, und zwar einmal durch die sich gegen die Ecken 20 abstützenden Nocken 14 (Fig. 3), außerdem durch die sich gegen die abgeschrägte Vorderkante 29 legende Innenkante 28 (Fig. 3-5) und durch die Rastnocken 43.

Die Seitenwände 6 weisen innen am offenen Ende der Aufnahme Anschläge auf, gegen die beim Ziehen der Lade die Nocken 14 anstoßen, falls versucht würde, sie ganz herauszuziehen. Hierzu können die Rasten 40 dienen.

Die Ausnehmungen 21 im Gehäuseboden 4 können gemäß Fig. 9 auch als vorne offene Schlitze 45 ausgebildet sein. Durch diese Ausnehmungen 21 oder Schlitze 45 wird die Kipplinie gegenüber der Außenkante des Gehäuses zurückverlegt und damit die Kippschräge vergrößert.

Die Dicke des Bodens 24 der Lade 2 muß geringer sein als der Überstand des Trapezes 46 der Kassette 47, damit nur dieses Trapez auf der Innenseite des Bodens bzw. der Oberseite des folgenden Gehäuses in einem Stapel gleitet.

Fig. 10 veranschaulicht an einer vergrößerten Darstellung, daß dei Vorderwand 48 der Schublade den Schlitz 35 überragt, was zur Folge hat, daß beim Ziehen der Lade der Zug auf diese Vorderwand und nicht auf die Verriegelungszungen 36 übertragen wird. Diese Verriegelungszungen 36 reagieren auf Druck, und zwar auf der gesamten Länge des festen Teils der Lade.

49 sind vertikale Schwalbenschwanzführungen für die Verbindung mehrerer Kassettenaufnahmen nebeneinander.

### Bezugszeichenaufstellung

1 Gehäuse (allgemein)
2 Schublade (allgemein)
3 Gehäuseoberteil (allgemein)
4 Gehäuseboden (allgemein)
5 Decke
6 Seitenwände (von 3)
7 Rückwand
8 Haken
9 Ausnehmungen
10 Ausnehmungen
11 Absätze
12 Führungsbahnen
13 Seitenwände (von 2)
14 Nocken
15 Führungsleisten
16 Fenster
17 Zungen
18 Öffnungen
19 Erweiterungen
20 Ecken
21 Ausnehmungen
22 Seitenkanten (im Boden 4)
23 Seitenkanten (in Decke 5)
24 Schubladenboden
25 Ausnehmung
26 Ausnehmungen
27 Ausnehmung
28 Innenkante
29 Vorderkante Boden
30 Schubladenrückwand
31 Leisten
32 Stege an Kassette
33 Außenkante Ladenboden
34 Innenfläche Seitenwand
35 Schlitz
36 Verriegelungszunge
37 Rastnuten
38 Auflaufschräge
39 Vorsprünge
40 Raste
41 Handhabe
42 Bahnfortführung
43 Rastnocken
45 Schlitze
46 Trapez
47 Kassette
48 Vorderwand Schublade
49 Schwalbenschwanzführungen

### Patentansprüche

1. Aus einem Gehäuse (1) und einer von diesem aufgenommenen Schublade (2) bestehende Tonbandkassettenaufnahme aus Kunststoff wobei der Boden (24) der Schublade (2) rückseitig eine sich über die innere Breite erstreckende Ausnehmung (27) aufweist, deren Innenkante (28) in Kippstellung parallel und nahe der Vorderkante (29) des Gehäusebodens (4) bzw. der Decke (5) des Gehäuseoberteils liegt, dadurch gekennzeichnet, daß das Gehäuse aus einem aus Decke (5) und Seitenwänden (6) bestehenden Oberteil (3) und einem Boden (4) zusammengesetzt ist und daß der über die Seitenwände (6) öffnungsseitig überstehende Teil von Gehäusedecke und -boden an beiden Seiten eine Ausnehmung (21) aufweist, deren parallel zur Rückwand liegenden Kanten (22) Kippkanten der Schublade beim Herausziehen sind.

2. Tonbandkassettenaufnahme nach dem Anspruch 1, dadurch gekennzeichnet, daß die Rückwand des Gehäuses (1) im oberen Teil aus der Rückwand (7) des Gehäuseoberteils (3) und im unteren Teil aus der Rückwand (30) der Schublade (2) besteht.

3. Tonbandkassettenaufnahme nach dem Anspruch 1, dadurch gekennzeichnet, daß die elastisch federnden Seitenwände (6) des Gehäuseoberteils (3) nach innen gerichtete Haken (8) aufweisen, die in entsprechende seitliche Ausnehmungen (9) am Gehäuseboden (4) oder Ausnehmungen (10) unterhalb der Decke (5) des Gehäuseoberteils (3) einrasten.

4. Tonbandkassettenaufnahme nach dem Anspruch 1, dadurch gekennzeichnet, daß an der Innenseite der Seitenwände (6) des Gehäuseoberteils (3) durch den eingepaßten Boden (4) begrenzte Führungsbahnen (12) vorgesehen sind, in denen außen an den Seitenwänden der Schublade (2) angebrachte Nocken (14) und Führungsleisten (15) gleiten.

5. Tonbandkassettenaufnahme nach dem Anspruch 4, dadurch gekennzeichnet, daß die Führungsbahn (12) gehäuseöffnungsseitig in eine sich in Richtung der Decke (5) des Kassettenoberteils (3) erstreckende Erweiterung (19) übergeht.

6. Tonbandkassettenaufnahme nach den Ansprüchen 4 und 5, dadurch gekennzeichnet, daß für die Leisten (15) an der Schublade im Anschluß an die Erweiterung (19) der Führungsbahn (12) eine entsprechend bemessene Bahnfortführung (42) vorgesehen ist.

7. Tonbandkassettenaufnahme nach den Ansprüchen 4 und 5, dadurch gekennzeichnet, daß die Oberkante der Führungsbahn (12) und die Innenkante der Erweiterung (19) eine ihnen gemeinsame Ecke (20) bilden, gegen die sich bei ganz gezogener Schublade die Rückseite der Nocken (14) abstützt.

8. Tonbandkassettenaufnahme nach dem Anspruch 1, dadurch gekennzeichnet, daß zwischen den Außenkanten (33) des Bodens (24) und den Innenkanten (34) der Seitenwände (13) der Schublade ein Schlitz (35) verbleibt, durch den das Ende der Seitenwände eine federnde Verriegelungszunge (36) wird.

9. Tonbandkassettenaufnahme nach dem Anspruch . 8, dadurch gekennzeichnet, daß mindestens eine lösbare Verbindung zwischen Gehäuse und Schublade vorgesehen ist, die aus einer zwischen sich eine Rastnute (37) bildenden Auflaufschräge (38) und mindestens einem Vorsprung (39) an der Außenseite der Verriegelungszunge sowie einer Raste (40) an der Innenseite der Seitenwand des Gehäuses besteht.

10. Tonbandkassettenaufnahme nach den Ansprüchen 8 und 9, dadurch gekennzeichnet, daß der Schlitz (35) von dem Ende der Vorderwand (48) der Schublade (2) überdeckt ist.

11. Tonbandkassettenaufnahme nach dem Anspruch 9, dadurch gekennzeichnet, daß außen am Ende der Verriegelungszunge (36) eine Handhabe (41) vorgesehen ist, die nicht die ganze Höhe der Seitenwände (13) der Schublade (2) einnimmt.

12. Tonbandkassettenaufnahme nach dem Anspruch 1, dadurch gekennzeichnet, daß die Seitenwände (6) des Gehäuseoberteils (3) innen am offenen Ende Anschläge für die Nocken (14) der Schublade (2) aufweisen.

13. Tonbandkassettenaufnahme nach dem Anspruch 12, dadurch gekennzeichnet, daß die Rasten (40) gleichzeitig Anschläge sind.

14. Tonbandkassettenaufnahme nach dem Anspruch 1, dadurch gekennzeichnet, daß die Dicke des Bodens (24) der Schublade geringer ist als der Überstand des Trapezes (46) einer Kassette (47).

15. Tonbandkassettenaufnahme nach dem Anspruch 1, dadurch gekennzeichnet, daß an mindestens einer Innenfläche (34) der Seitenwände (13) der Schublade (2) im Bereich ihrer Ausnehmung (27) ein Rastnokken (43) vorgesehen ist.

**Claims**

1. A tape cassette holder of plastics material comprising a casing (1) and a drawer (2) held by the latter, the base (24) of the drawer (2) being provided at the rear with a recess (27), which extends over the internal width and the internal edge (28) of which is parallel and close to the front edge (29) of the base (4) of the casing or the top (5) of the upper portion of the casing in the tilted position, characterized in that the casing is formed from and upper part (3) comprising a top (5) and side walls (6) and from a base (4), and the portion of the casing top and base projecting on the side of the opening beyond the side walls (6) is provided on both sides with a recess (21), whose edges (22) lying parallel to the rear wall are tilting edges of the drawer during withdrawal.

2. A tape cassette holder according to Claim 1, characterized in that the upper portion of the rear wall of the casing (1) comprises the rear wall (7) of the upper portion (3) of the casing and the lower portion comprises the rear wall (30) of the drawer (2).

3. A tape cassette holder according to Claim 1, characterized in that the resilient side walls (6) of the upper portion (3) of the casing comprise hooks (8) which are directed inwards and which engage in corresponding lateral recesses (9) in the base (4) of the casing or in recesses (10) below the top (5) of the upper portion (3) of the casing.

4. A tape cassette holder according to Claim 1, characterized in that guide tracks (12), which are bounded by the matched base (4) and in which guide strips (15) and studs (14) disposed outside on the side walls of the drawer (2) slide, are provided on the inside of the side walls (6) of the upper portion (3) of the casing.

5. A tape cassette holder according to Claim 4, characterised in that the guide track (12) passes on the side of the casing opening into an enlargement (19) extending in the direction of the top (5) of the upper portion (3) of the cassette.

6. A tape cassette holder according to Claims 4 and 5, characterized in that an appropriately dimensioned track extension (42) is provided adjacent the enlargement (19) of the guide track (12) for the strips (15) on the drawer.

7. A tape cassette holder according to Claims 4 and 5, characterized in that the upper edge of the guide track (12) and the internal edge of the enlargement (19) form a corner common to them-

5

selves, against which the rear side of the studs (14) is supported when the drawer is completely withdrawn.

8. A tape cassette holder according to Claim 1, characterized in that a slot (35), through which the end of the side walls becomes a resilient locking tongue (36), is left between the external edges (33) of the base (24) and the internal edges (34) of the side walls (13) of the drawer.

9. A tape cassette holder according to Claim 8, characterized in that at least one detachable connexion is provided between the casing and the drawer, which comprises a run-up slope (38) forming a catch groove (37) and at least one projection (39) on the outside of the locking tongue and a catch (40) on the inside of the side wall of the casing.

10. A tape cassette holder according to Claims 8 and 9, characterized in that the slot (35) is covered by the end of the front wall (48) of the drawer (2).

11. A tape cassette holder according to Claim 9, characterized in that a handle (41), which does not occupy the entire height of the side walls (13) of the drawer (2), is provided on the outside at the end of the locking tongue (36).

12. A tape cassette holder according to Claim 1, characterized in that inside at the open end the side walls (6) of the upper portion (3) of the casing comprise stops for the studs (14) of the drawer (2).

13. A tape cassette holder according to Claim 12, characterized in that the catches (40) are at the same time stops.

14. A tape cassette holder according to Claim 1, characterized in that the thickness of the base (24) of the drawer is less than the projecting length of the trapezium (46) of a cassette (47).

15. A tape cassette holder according to Claim 1, characterized in that a catching stud (43) is provided on at least one internal surface (34) of the lateral walls (13) of the drawer (2) in the region of its recess (27).

**Revendications**

1. Boîte en matière plastique pour cassettes à bande magnétique, comprenant un réceptacle (1) et un tiroir (2) emboîté dans celui-ci, le fond (24) du tiroir (2) compotant, sur sa face arrière, une fenêtre (27) qui s'étend sur la largeur intérieure et dont l'arête interne (28) en position de basculement se situe parallèlement et à proximité de l'arête avant (29) du fond (4) du réceptacle ou du couvercle (5) de la partie supérieure de celui-ci, caractérisée par le fait que le réceptacle est composé d'une partie supérieure (3) comprenant le couvercle (5) et les parois latérales (6) et d'un fond (4) et que la partie, faisant saillie hors des parois latérales (6), côté ouverture, du couvercle et du fond du réceptacle, comporte des deux côtés un évidement (21) dont les arêtes (22), parallèles à la paroi arrière, sont les arêtes de basculement du tiroir lors de son extraction.

2. Boîte pour cassettes à bande magnétique selon la revendication 1, caractérisée par le fait que la paroi arrière du réceptacle (1), dans la partie supérieure, est constituée par la paroi arrière (7) de sa partie supérieure (3) et, dans la partie inférieure, par la paroi arrière (30) du tiroir (2).

3. Boîte pour cassettes à bande magnétique selon la revendication 1, caractérisée par le fait que les parois latérales élastiques (6) de la partie supérieure (3) du réceptacle comportent des crochets (8) qui sont dirigés vers l'intérieur et qui s'encliquettent dans des évidements latéraux correspondants (9) du fond (4) du réceptacle ou dans des évidements (10) situés en dessous du couvercle (5) de la partie supérieure (3) du réceptacle.

4. Boîte pour cassettes à bande magnétique selon la revendication 1, caractérisée par le fait que sur la face interne des parois latérales (6) de la partie supérieure (3) du réceptacle sont prévus des chemins de guidage (12) délimités par le fond (4) emboîte et dans lesquels glissent des ergots (14) et des barrettes de guidage (15) aménagées extérieurement sur les parois latérales du tiroir (2).

5. Boîte pour cassettes à bande magnétique selon la revendication 4, caractérisée par le fait que le chemin de guidage (12), côté ouverture du réceptacle, se transforme en un élargissement (19) s'étendant en direction du couvercle (5) de la partie supérieure (3) du réceptacle.

6. Boîte pour cassettes à bande magnétique selon les revendications 4 et 5, caractérisée par le fait qu'à la suite de l'élargissement (19), le chemin de guidage (12) se continue par un prolongement (42) dimensionné en conséquence pour les barrettes (15) du tiroir.

7. Boîte pour cassettes à bande magnétique selon les revendications 4 et 5, caractérisée par le fait que l'arête supérieure du chemin de guidage (12) et l'arête intérieure de l'élargissement (19) forment un coin (20) qui leur est commun et contre lequel vient s'appliquer la face arrière des ergots (14) lorsque le tiroir est complètement tiré.

8. Boîte pour cassettes à bande magnétique selon la revendication 1, caractérisée par le fait qu'entre les arêtes externes (33) du fond (24) et les arêtes internes (34) des parois latérales (13) du tiroir subsiste une fente (35) qui transforme l'extrémité des parois latérales en une languette de verrouillage élastique (36).

9. Boîte pour cassettes à bande magnétique selon la revendication 8, caractérisée par le fait qu'entre le réceptacle et le tiroir est prévu au moins un raccordement amovible qui est constitué par une butée oblique (38) et par au moins une saillie (39) aménagées sur la face externe de la languette de verrouillage et formant entre elles une rainure d'encliquetage (37), ainsi que par un cran d'arrêt (40) placé sur la face interne de la paroi latérale du réceptacle.

10. Boîte pour cassettes à bande magnétique selon les revendications 8 et 9, caractérisée par le fait que la fente (35) est recouverte par l'extrémité de la paroi avant (48) du tiroir (2).

11. Boîte pour cassettes à bande magnétique selon la revendication 9, caractérisée par le fait qu'à l'extérieur de l'extrémité de la languette de verrouillage (36) est prévue une prise (41) qui n'occupe pas toute la hauteur des parois latérales (13) du tiroir (2).

12. Boîte pour cassettes à bande magnétique selon la revendication 1, caractérisée par le fait que les parois latérales (6) de la partie supérieure (3) du réceptacle comporte à l'intérieur de l'extrémité ouverte des butées pour les ergots (14) du tiroir (2).

13. Boîte pour cassettes à bande magnétique selon la revendication 12, caractérisée par le fait que les crans d'arrêt (40) sont en même temps des butées.

14. Boîte pour cassettes à bande magnétique selon la revendication 1, caractérisée par le fait que l'épaisseur du fond (24) du tiroir est plus faible que la hauteur de la partie en saillie du trapèze (46) d'une cassette (47).

15. Boîte pour cassettes à bande magnétique selon la revendication 1, caractérisée par le fait qu'un téton d'encliquetage (43) est prévu sur au moins une surface interne (34) des parois latérales (13) du tiroir (2) dans la zone de sa fenêtre (27).

FIG. 5

FIG. 4

FIG. 1

FIG. 3

FIG. 2

*FIG. 8*

*FIG. 6*

*FIG. 7*

*FIG. 9*

*FIG. 10*